# EUROPÄISCHE PATENTSCHRIFT

(11) **EP 3 398 379 B1**
(45) Veröffentlichungstag und Bekanntmachung des Hinweises auf die Patenterteilung: **06.10.2021**
(21) Anmeldenummer: 16822187.7
(22) Anmeldetag: 23.12.2016
(51) Int. Cl.: H04W 48/18, H04W 8/08

(54) **VERFAHREN ZUM AUFBAUEN EINER KOMMUNIKATIONSVERBINDUNG EINES KOMMUNIKATIONSENDGERÄTES ÜBER EIN KOMMUNIKATIONSNETZWERK-SLICE**
METHOD FOR ESTABLISHING A COMMUNICATION LINK OF A COMMUNICATION TERMINAL VIA A COMMUNICATION NETWORK SLICE
PROCEDE DESTINE A L'ETABLISSEMENT D'UNE LIAISON DE COMMUNICATION D'UN APPAREIL DE COMMUNICATION PAR UNE TRANCHE DE RESEAU DE COMMUNICATION

(30) Priorität: 30.12.2015 EP 15203162; 30.12.2015 DE 102015122980
(43) Veröffentlichungstag der Anmeldung: 07.11.2018
(73) Patentinhaber: Deutsche Telekom AG, 53113 Bonn (DE)
(72) Erfinder: BISCHINGER, Kurt, 1120 Wien (AT)
(74) Vertreter: Braun-Dullaeus Pannen Emmerling Patent- & Rechtsanwaltspartnerschaft mbB
(86) Internationale Anmeldenummer: PCT/EP2016/082641
(87) Internationale Veröffentlichungsnummer: WO 2017/114798

(56) Entgegenhaltungen:
- US-A1- 2004 067 735
- US-A1- 2005 276 229
- "3 rd Generation Partnership Project; Technical Specification Group Services and System Aspects; Feasibility Study on New Services and Markets Technology Enablers; Stage 1 (Release 14)", 3GPP DRAFT; TR22 891-V120-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 9. Dezember 2015 (2015-12-09), XP051071179, Gefunden im Internet: URL:http://www.3gpp.org/ftp/tsg_sa/WG1_Ser v/TSGS1_72_Anaheim/docs/ [gefunden am 2015-12-09]
- DEUTSCHE TELEKOM: "Key issue: 3GPP architecture impacts to support network slicing roaming", 3GPP DRAFT; S2-153934_NETWORK_SLICING_ROAMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. SA WG2, Nr. Anaheim, USA; 20151116 - 20151120 16. November 2015 (2015-11-16), XP051041140, Gefunden im Internet: URL:http://www.3gpp.org/ftp/Meetings_3GPP_ SYNC/SA2/Docs/ [gefunden am 2015-11-16]

## Beschreibung

Die vorliegende Erfindung betrifft einen Kommunikationsaufbau in einem Kommunikationsnetzwerk mit mehreren Subnetzwerken, insbesondere in einem 5G-Kommunikationsnetzwerk mit mehreren Slices.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (loT), spezielle Fähigkeiten wie z.B. geringerer Laufzeit, welche über das hinausgehen was 4G Kommunikationsnetze fähig sind zu leisten. Dabei wird 5G als ein Ende-zu-Ende System betrachtet, das sämtliche Netzwerkaspekte beinhaltet mit einem Design, das einen hohen Grad an Konvergenz ermöglicht. 5G wird die heutigen Zugangsmechanismen und deren mögliche Weiterentwicklungen vollständig nutzten, einschließlich der heutigen Festnetzzugangstechnologien vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen etc. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Raumen. In solch einer Umgebung gibt es ein fundamentales Verlangen nach 5G, um ein nahtloses und konsistentes Nutzererlebnis über Zeit und Raum zu erfüllen. Für den Betreiber eines 5G Kommunikationsnetzes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis daran, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich bereitzustellen, zum anderen aber auch die Flexibilität im Betrieb zu erhöhen und maßgeschneiderte Funktionen mit dem geringst möglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauens, Identität und Privatsphäre der Nutzer erwartet.

Die Druckschrift US 2004 / 067735 A1 betrifft ein Verfahren und System zum Registrieren eines mobilen Geräts in einem Mobilfunknetzwerk, z.B. in einem GSM, GPRS oder UMTS Kommunikationssystem.

Die Druckschrift 3GPP TR 22.891 beschreibt verschiedene Anwendungsfälle (Use Cases), die das 3GPP System in der Zukunft unterstützen soll. Insbesondere unter Kapitel 5.2 werden Anwendungsfälle zum "Network Slicing" beschrieben und unter Kapitel 5.69 Anwendungsfälle zum "Network Slicing Roaming".

Es ist die Aufgabe der vorliegenden Erfindung, ein Konzept zu schaffen, um die Leistungsfähigkeit und Flexibilität der Kommunikation zu steigern, insbesondere in 5G bezüglich der oben genannten Anforderungen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

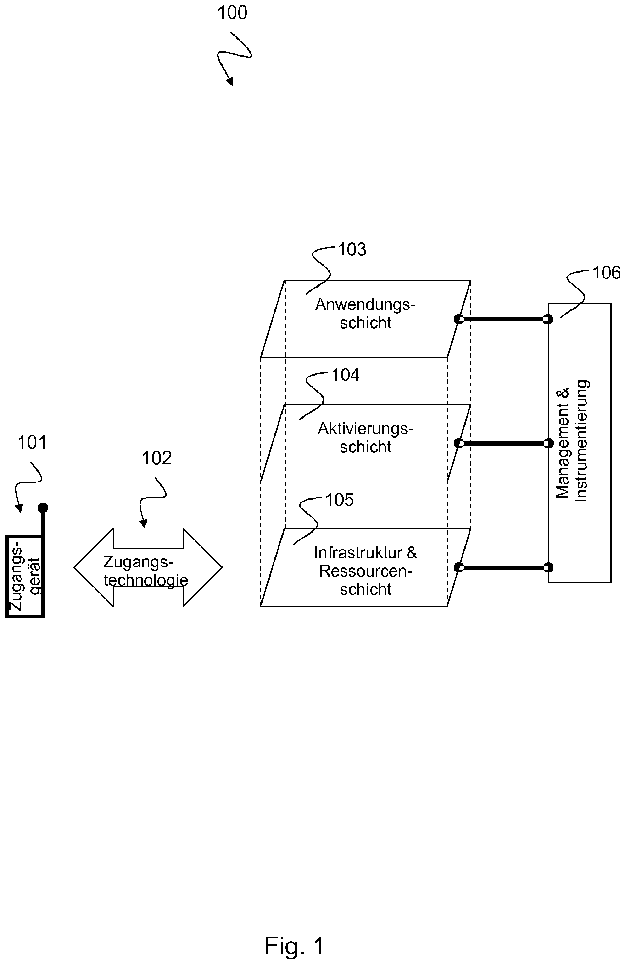

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

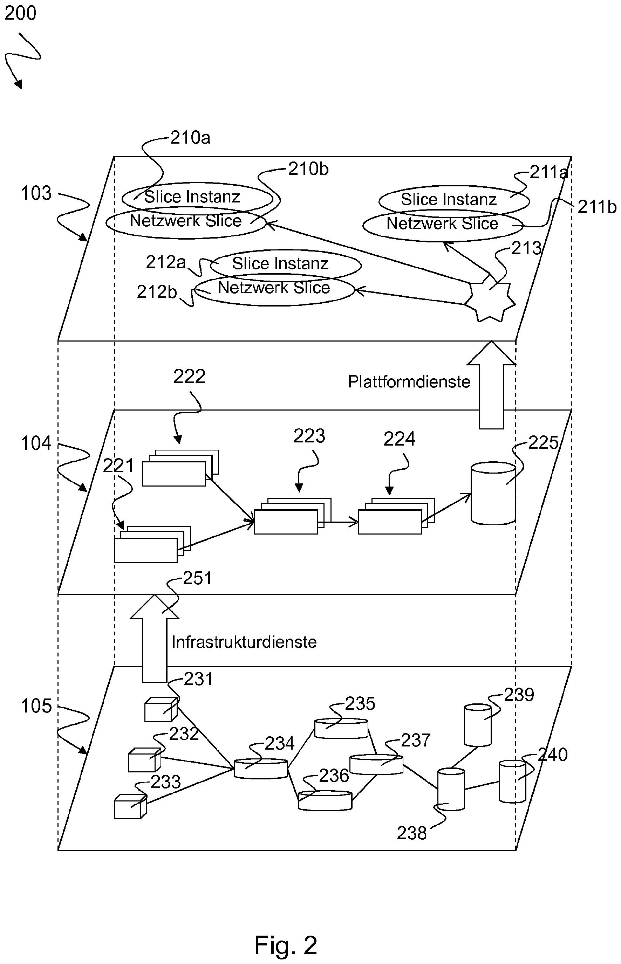

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben), wie im Folgenden beschrieben. Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instandhalten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Gemäß einem ersten Aspekt betrifft die Erfindung ein Verfahren zum Aufbauen einer Kommunikationsverbindung eines Kommunikationsendgerätes über ein Kommunikationsnetzwerk, wobei das Kommunikationsnetzwerk eine Mehrzahl von Subnetzwerken mit einem ersten Subnetzwerk und einem zweiten Subnetzwerk aufweist, wobei in dem ersten Subnetzwerk eine erste Identifizierungsentität und in dem zweiten Subnetzwerk eine zweite Identifizierungsentität zur Identifizierung des Kommunikationsgerätes angeordnet sind, wobei jedem Subnetzwerk des Kommunikationsnetzwerkes eine Subnetzwerk-Kennung zugeordnet ist, wobei in dem Kommunikationsnetzwerk eine Management-Entität angeordnet ist, welche eine Zuordnung des Kommunikationsendgerätes zu einem der beiden Subnetzwerke verwaltet, und wobei das Verfahren die folgenden Schritte umfasst: Empfangen einer Identifikation des Kommunikationsendgerätes durch die erste Identifizierungsentität des ersten Subnetzwerkes, wobei die Identifikation das Kommunikationsendgerät identifiziert; Identifizieren des Kommunikationsendgerätes durch die erste Identifizierungsentität auf der Basis der Identifikation des Kommunikationsendgerätes; Zuordnen eines Subnetzwerkes zu dem Kommunikationsendgerät durch die Management-Entität auf der Basis einer Zuordnung einer Subnetzwerk-Kennung zu dem Kommunikationsendgerät; und Aufbauen einer Kommunikationsverbindung des Kommunikationsendgerätes über das erste Subnetzwerk, falls die der Identifikation des Kommunikationsendgerätes zugeordnete Subnetzwerk-Kennung der Subnetzwerk-Kennung des ersten Subnetzwerkes entspricht; oder Aufbauen einer Kommunikationsverbindung des Kommunikationsendgerätes über das zweite Subnetzwerk, falls die der übermittelten Identifikation zugeordnete Subnetzwerk-Kennung und die Subnetzwerk-Kennung des ersten Subnetzwerkes unterschiedlich sind.

Aufgrund des Subnetzwerk-Aufbaus des Kommunikationsnetzwerks kann die Leistungsfähigkeit der Kommunikation gesteigert werden. Insbesondere kann damit ein höherer Datendurchsatz, eine geringere Verzögerung, eine besonders hohe Zuverlässigkeit, eine weitaus höhere Verbindungsdichte und ein größerer Mobilitätsbereich erlangt werden. Zusammen mit einer erhöhten Leistungsfähigkeit können mit dem Verfahren stark heterogene Umgebungen gesteuert werden einhergehend mit der Fähigkeit zur Sicherung von Vertrauen, Identität und Privatsphäre der Nutzer.

Gemäß einer Ausführungsform des Verfahrens wird die Kommunikationsverbindung über das zweite Subnetzwerk aufgebaut, falls die der übermittelten Identifikation zugeordnete Subnetzwerk-Kennung die Subnetzwerk-Kennung des zweiten Subnetzwerkes ist.

Dies bringt den Vorteil, dass bei einer Default-Einstellung des ersten Subnetzwerkes in dem Kommunikationsendgerät die Kommunikation über das erste Subnetz erfolgt, d.h. das Kommunikationsendgerät braucht am Anfang keine Informationen über den Subnetzaufbau und die Struktur des Kommunikationsnetzwerks. Falls dem Kommunikationsendgerät aber Informationen vorliegen, beispielsweise aus einer vorherigen Kommunikation, dass es dem zweiten Subnetzwerk zugeordnet ist, so kann die Kommunikation sogleich über das zweite Subnetzwerk initiiert werden ohne dass die Default-Abfrage nötig ist.

Gemäß einer Ausführungsform des Verfahrens ist das Kommunikationsnetzwerk ein Netzwerk einer fünften Generation (5G) oder einer weiteren Generation, und die Subnetzwerke sind Slices des Kommunikationsnetzwerkes.

Damit können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Gemäß einer Ausführungsform des Verfahrens bewirkt die Management-Entität die Zuordnung der Subnetzwerk-Kennung zu dem Kommunikationsendgerät auf der Basis zumindest einer der folgenden Zuordnungen: einer Zuordnung der Identifikation des Kommunikationsendgerätes, insbesondere einer Hardware-Kennung des Kommunikationsgerätes wie IMSI (International Mobile Subscriber Identity) oder IMEI (International Mobile Station Equipment Identity) oder elD (eUICC identifier) der eUICC (embedded universal integrated circuit card) zu der Subnetzwerk-Kennung, und/oder einer Zuordnung eines Kommunikationsdienstes zu dem Kommunikationsendgerät und/oder einer Zuordnung einer Softwareanwendung zu dem Kommunikationsendgerät, und/oder eines Betriebssystems des Kommunikationsendgerät zu einem der beiden Subnetzwerke.

Dies bietet den Vorteil, dass das Kommunikationsendgerät anhand mehrerer Kennungen einem Subnetz zugeordnet werden kann, wie beispielsweise IMSI, IMEI, elD eines Kommunikationsdienstes, einer Softwareanwendung oder einem Betriebssystem, was einen höheren Grad an Flexibilität bietet.

Subnetzwerke können unterschiedlichen Anwendungen oder Diensten zugeordnet sein, sodass das Kommunikationsendgerät in weiterer Abhängigkeit hiervon über mehrere Subnetzwerke kommunizieren kann. Die Subnetzwerke unterscheiden sich voneinander durch unterschiedliche Funktionen, Dienste oder Anwendungen.

Die Zuordnung von Kommunikationsendgerät zu Subnetzwerk kann vorteilhafterweise schnell aufgefunden werden, da die Management-Entität auf der gleichen Kommunikationsebene wie die Subnetze angeordnet sein kann, z.B. auf der Anwendungsschicht gemäß 5G Schichtenmodell. Somit braucht keine Verbindungsanfrage nach einem übergeordneten Netzwerk Management initiiert werden, welches beispielsweise in einer übergeordneten Management & Instrumentierungsschicht gemäß 5G Schichtenmodell angeordnet sein kann. In einer Ausführungsform kann ein UE bzw. Kommunikationsendgerät auf der Basis von einiger Information einem Subnetz zugeordnet werden, das durch eine Subnetzwerkkennung identifiziert werden kann, so dass eine weitere Zuordnung von Subnetzwerkkennung zu Subnetzwerk nicht unbedingt notwendig ist.

Gemäß einer Ausführungsform des Verfahrens übermittelt das Kommunikationsendgerät die Identifikation des Kommunikationsgerätes zu der ersten oder der zweiten Identifizierungsentität zusammen mit der Subnetzwerk-Kennung, welche das dem Kommunikationsendgerät zugeordnete Subnetzwerk anzeigt.

Dies bringt den Vorteil, dass das Kommunikationsendgerät der jeweiligen Identifizierungsentität alle notwendigen Informationen übermittelt, um die Identifizierung des Kommunikationsendgeräts durchzuführen.

Gemäß einer Ausführungsform des Verfahrens übermittelt die erste Identifizierungsentität die Identifikation des Kommunikationsgerätes und die Subnetzwerk-Kennung an die Management-Entität.

Dies bringt den Vorteil, dass die erste Identifizierungsentität der Management-Entität alle notwendigen Informationen übermittelt, um die Zuordnung des Kommunikationsendgeräts zu einem Subnetzwerk auszuführen.

Gemäß einer Ausführungsform des Verfahrens übermittelt in dem Schritt des Zuordnens die Management-Entität die der Identifikation des Kommunikationsgerätes zugeordnete Subnetzwerk-Kennung an die erste Identifizierungsentität, und - falls die der Identifikation des Kommunikationsendgerätes zugeordnete Subnetzwerk-Kennung und die Subnetzwerk-Kennung des ersten Subnetzwerkes unterschiedlich sind - übermittelt die erste Identifizierungsentität die übermittelte Subnetzwerk-Kennung an das Kommunikationsendgerät oder - falls die der Identifikation des Kommunikationsendgerätes zugeordnete Subnetzwerk-Kennung und die Subnetzwerk-Kennung des ersten Subnetzwerkes unterschiedlich sind - übermittelt die erste Identifizierungsentität die übermittelte Subnetzwerk-Kennung an die zweite Identifizierungsentität.

Dies bringt den Vorteil einer flexiblen Zuordnung von Kommunikationsendgerät zu Subnetzwerk. Die Zuordnungsinformationen müssen nur in der Management-Entität vorhanden sein und nicht in jedem einzelnen Subnetzwerk.

Gemäß einer Ausführungsform wird die Subnetzwerk-Kennung nur dann an die zweite Identifizierungsentität weitergegeben, wenn auch das UE bzw. Kommunikationsendgerät die Subnetzwerk-Kennung erhält. Dann kann im zweiten Schritt die Verifizierung über die zweite Identifizierungsentität unterbleiben, was das Verfahren vereinfacht.

Gemäß einer Ausführungsform des Verfahrens übermittelt in dem Schritt des Aufbauens der Kommunikationsverbindung über das zweite Subnetzwerk das Kommunikationsendgerät die Identifikation an die zweite Identifizierungsentität.

Dies bietet den Vorteil, dass dem zweiten Subnetzwerk damit die Identifikation des Kommunikationsendgerätes vorliegt und es damit das Kommunikationsendgerät identifizieren und authentifizieren kann.

Gemäß einer Ausführungsform des Verfahrens identifiziert in dem Schritt des Aufbauens der Kommunikationsverbindung über das zweite Subnetzwerk die zweite Identifizierungsentität das Kommunikationsendgerät auf der Basis der Identifikation des Kommunikationsendgerätes, und nach erfolgter Identifikation des Kommunikationsendgerätes werden die folgenden Schritte ausgeführt: Zuordnen eines Subnetzwerkes zu dem Kommunikationsendgerät durch die Management-Entität auf der Basis der Zuordnung einer Subnetzwerk-Kennung zu dem Kommunikationsendgerät; und Aufbauen einer Kommunikationsverbindung des Kommunikationsendgerätes über das zweite Subnetzwerk, falls die der Identifikation des Kommunikationsendgerätes zugeordnete Subnetzwerk-Kennung der Subnetzwerk-Kennung des zweiten Subnetzwerkes entspricht; oder Aufbauen einer Kommunikationsverbindung des Kommunikationsendgerätes über ein weiteres Subnetzwerk des Kommunikationsnetzwerkes oder Abweisen des Kommunikationsgerätes, falls die der Identifikation des Kommunikationsendgerätes zugeordnete Subnetzwerk-Kennung und die Subnetzwerk-Kennung des zweiten Subnetzwerkes unterschiedlich sind.

Damit kann in vorteilhafter Weise ein rekursiver Verbindungsaufbau realisiert werden, d.h. zuerst ein Verbindungsversuch über das erste Subnetzwerk, dann über das zweite Subnetzwerk bis schließlich über ein n-tes Subnetzwerk.

Gemäß einer Ausführungsform des Verfahrens übermittelt in dem Schritt des Aufbauens der jeweiligen Kommunikationsverbindung das Kommunikationsendgerät eine Subnetzwerk-Kennung an die erste oder an die zweite Identifizierungsentität.

Dies bringt den Vorteil, dass die Subnetzwerk-Kennung und die Identifikation des Kommunikationsendgerätes in allen weiteren Kommunikationsknoten genutzt werden kann, um eine effiziente Kommunikationsverbindung aufzubauen.

Gemäß einer Ausführungsform des Verfahrens ordnet die jeweilige Identifizierungsentität oder die Management-Entität ein Subnetzwerk des Kommunikationsnetzes dem Kommunikationsgerät auf der Basis der übermittelten Subnetzwerk-Kennung zu, falls die übermittelte Subnetzwerk-Kennung ein Subnetzwerk eines anderen Kommunikationsnetzwerkes anzeigt.

Dies bringt den Vorteil, dass Roaming damit effizient von der jeweiligen Identifizierungsentität oder der Management-Entität realisiert werden kann.

Gemäß einer Ausführungsform des Verfahrens ordnet die jeweilige Identifizierungsentität oder die Management-Entität dasjenige Subnetzwerk des Kommunikationsnetzes dem Kommunikationsgerät zu, das dem Subnetzwerk des anderen Kommunikationsnetzes entspricht.

Dies bringt den Vorteil, dass das Verfahren sowohl im Heimatkommunikationsnetzwerk als auch im Fremdkommunikationsnetzwerk angewendet werden kann. Roaming wird somit effizient realisiert.

Gemäß einer Ausführungsform des Verfahrens wird die Kommunikationsverbindung über das erste Subnetzwerk durch die erste Identifizierungsentität aufgebaut, und die Kommunikationsverbindung über das zweite Subnetzwerk wird durch die zweite Identifizierungsentität aufgebaut.

Dies bringt den Vorteil, dass jedes Subnetzwerk eigenständig eine Kommunikationsverbindung mit dem Kommunikationsendgerät aufbauen kann.

Gemäß einem zweiten Aspekt betrifft die Erfindung ein Kommunikationsendgerät für die Kommunikation über ein Kommunikationsnetzwerk, wobei das Kommunikationsnetzwerk eine Mehrzahl von Subnetzwerken mit einem ersten Subnetzwerk und einem zweiten Subnetzwerk aufweist, wobei in dem ersten Subnetzwerk eine erste Identifizierungsentität und in dem zweiten Subnetzwerk eine zweite Identifizierungsentität zur Identifizierung des Kommunikationsgerätes angeordnet sind, wobei jedem Subnetzwerk des Kommunikationsnetzwerkes eine Subnetzwerk-Kennung zugeordnet ist, wobei in dem Kommunikationsnetzwerk eine Management-Entität angeordnet ist, welche eine Zuordnung des Kommunikationsendgerätes zu einem der beiden Subnetzwerke verwaltet, und wobei das Kommunikationsendgerät die folgenden Merkmale umfasst: eine Kommunikationsschnittstelle zum Aussenden einer Identifikation des Kommunikationsendgerätes an die erste Identifizierungsentität des ersten Subnetzwerkes, um einen Verbindungsaufbau über das erste Subnetzwerk zu initiieren, wobei die Kommunikationsschnittstelle ausgebildet ist, über das erste Subnetzwerk eine Subnetzwerk-Kennung zu empfangen, welche einem zweiten Subnetzwerk zugeordnet ist, und wobei die Kommunikationsschnittstelle ferner ausgebildet ist, ansprechend auf den Empfang der Subnetzwerk-Kennung eine Kommunikationsverbindung über das zweite Subnetzwerk aufzubauen.

Aufgrund des Subnetzwerk-Aufbaus des Kommunikationsnetzwerks kann die Leistungsfähigkeit der Kommunikation mit dem Kommunikationsendgerät gesteigert werden. Insbesondere kann damit ein höherer Datendurchsatz, eine geringere Verzögerung, eine besonders hohe Zuverlässigkeit, eine weitaus höhere Verbindungsdichte und ein größerer Mobilitätsbereich erlangt werden. Ferner kann das Kommunikationsendgerät auch in stark heterogenen Umgebungen eingesetzt werden und bietet seinem Nutzer Vertrauen, Identität und Privatsphäre.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung eines 5G-Kommunikationsnetzwerks mit mehreren Slices (Netzwerkscheiben) 200;
Fig. 3 eine schematische Darstellung eines Kommunikationssystems 300 mit einem Kommunikationsendgerät 301 und einem Kommunikationsnetz 303 gemäß einer beispielhaften Ausführungsform;
Fig. 4 eine schematische Darstellung eines Verfahrens 400 zum Aufbauen einer Kommunikationsverbindung eines Kommunikationsendgerätes über ein Kommunikationsnetzwerk gemäß einer beispielhaften Ausführungsform; und
Fig. 5 eine schematische Darstellung des Einbuchungsvorgangs eines Kommunikationsendgerätes in ein Kommunikationsnetz am Beispiel eines 5G-Netzes 500 gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

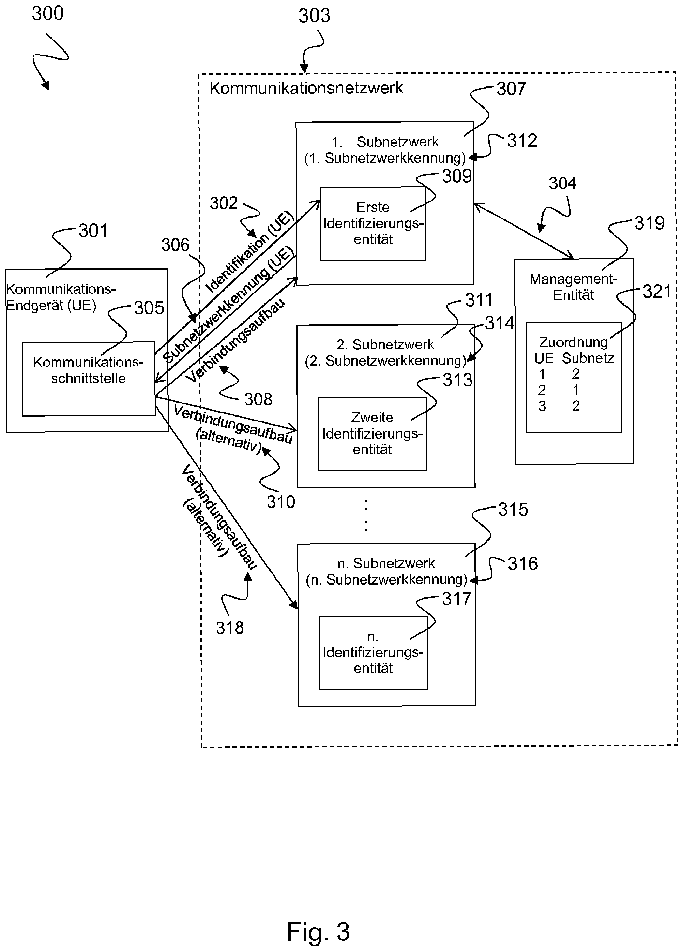

Fig. 3 zeigt eine schematische Darstellung eines Kommunikationssystems 300 mit einem Kommunikationsendgerät 301 und einem Kommunikationsnetz 303 gemäß einer beispielhaften Ausführungsform.

Das Kommunikationsendgerät 301 umfasst eine Kommunikationsschnittstelle 305, um Nachrichten mit dem Kommunikationsnetzwerk 303 auszutauschen und eine Verbindung des Kommunikationsendgerätes 301 mit dem bzw. über das Kommunikationsnetzwerk 303 aufzubauen.

Das Kommunikationsnetzwerk 303 umfasst eine Mehrzahl von Subnetzwerken 307, 311, 315 mit einem ersten Subnetzwerk 307, einem zweiten Subnetzwerk 311, und weiteren Subnetzwerken, von denen beispielhaft ein n. Subnetzwerk 315 dargestellt ist. Diese Mehrzahl von Subnetzwerken entsprechen einer Mehrzahl von Slices 210b, 211b, 212b, wie oben zu Figur 1 und Figur 2 beschrieben. In dem ersten Subnetzwerk 307 ist eine erste Identifizierungsentität 309 angeordnet, mit der das Kommunikationsgerät 301 identifiziert werden kann. In dem zweiten Subnetzwerk 311 ist eine zweite Identifizierungsentität 313 angeordnet, mit der das Kommunikationsgerät 301 identifiziert werden kann. Das gleiche gilt für die weiteren Subnetzwerke, d.h. in dem n-ten Subnetzwerk 315 ist eine n-te Identifizierungsentität 317 angeordnet, mit der das Kommunikationsgerät 301 identifiziert werden kann.

Jedem Subnetzwerk 307, 311, 315 des Kommunikationsnetzwerkes 303 ist eine Subnetzwerk-Kennung 312, 314, 316 zugeordnet, die das entsprechende Subnetzwerk identifiziert. Das Kommunikationsnetzwerk 303 umfasst ferner eine Management-Entität 319, welche eine Zuordnung 321 des Kommunikationsendgerätes 301 zu einem der Subnetzwerke 307, 311, 315 verwaltet.

Die Kommunikationsschnittstelle 305 des Kommunikationsendgeräts 301 ist dafür ausgelegt, eine Identifikation 302 des Kommunikationsendgerätes 301 an die erste Identifizierungsentität 309 des ersten Subnetzwerkes 307 auszusenden, um einen Verbindungsaufbau 308 über das erste Subnetzwerk 307 zu initiieren.

Die Kommunikationsschnittstelle 305 ist ferner dafür ausgelegt, über das erste Subnetzwerk 307 eine Subnetzwerk-Kennung 306 zu empfangen, welche beispielsweise dem zweiten Subnetzwerk 311 zugeordnet sein kann, und welche in der von der Management-Entität verwalteten Zuordnung 321, beispielsweise einer Tabelle in der Management-Entität, abgelegt sein kann.

Die Kommunikationsschnittstelle 305 ist ferner dafür ausgelegt, ansprechend auf den Empfang der Subnetzwerk-Kennung 306 eine Kommunikationsverbindung 310 über das zweite Subnetzwerk 311 aufzubauen, d.h. bei Zuordnung der Subnetzwerk-Kennung 306 zu dem zweiten Subnetzwerk 311. Falls die Subnetzwerk-Kennung 306 einem anderen Subnetzwerk, beispielsweise dem n-ten Subnetzwerk 315 zugeordnet ist, wird die Kommunikationsschnittstelle 305 eine Kommunikationsverbindung 318 über das n-te Subnetzwerk 315 aufbauen.

Bezüglich des Kommunikationsnetzwerks 303 erfolgt der Kommunikationsaufbau wie im Folgenden dargestellt.

Die erste Identifizierungsentität 309 des ersten Subnetzwerkes 307, welches beispielsweise als Default-Subnetz mit Default-Identifizierungsentität dem Kommunikationsendgerät 301 zugeordnet ist, empfängt eine Identifikation 302 des Kommunikationsendgerätes 301. Diese Identifikation 302 identifiziert das Kommunikationsendgerät 301. Auf der Basis dieser Identifikation 302 identifiziert die erste Identifizierungsentität 309 das Kommunikationsendgerät 301. Die Aufgaben dieser ersten Identifizierungsentität 309 können dabei denjenigen einer MME (Mobility Management Entity) im LTE-Netz entsprechen bzw. diese umfassen. Die Identifizierung kann anhand einer IMSI oder eines damit verknüpften temporären Identifizierungsmerkmals des Kommunikationsendgeräts 301, beispielsweise eines UE erfolgen.

Danach wird von der Management-Entität 319 ein Subnetzwerk auf der Basis der Zuordnung 321 einer Subnetzwerk-Kennung 306 zu dem Kommunikationsendgerät 301 zugeordnet.

Es folgt das Aufbauen einer Kommunikationsverbindung 308 des Kommunikationsendgerätes 301 über das erste Subnetzwerk 307, falls die der Identifikation 302 des Kommunikationsendgerätes 301 zugeordnete Subnetzwerk-Kennung 306 der Subnetzwerk-Kennung 312 des ersten Subnetzwerkes 307 entspricht. Alternativ folgt das Aufbauen einer Kommunikationsverbindung 310 des Kommunikationsendgerätes 301 über das zweite Subnetzwerk 311 bzw. über ein anderes der Subnetzwerke, beispielsweise einer Kommunikationsverbindung 318 über das n-te Subnetzwerk 315, falls die der übermittelten Identifikation 302 zugeordnete Subnetzwerk-Kennung 306 und die Subnetzwerk-Kennung 312 des ersten Subnetzwerkes 307 unterschiedlich sind oder falls die der übermittelten Identifikation 302 zugeordnete Subnetzwerk-Kennung 306 der Subnetzwerk-Kennung 312 des zweiten Subnetzwerkes 311 bzw. des n-ten Subnetzwerkes 315 entspricht.

Die Aufgaben der Management-Entität 319 können dabei denjenigen eines HSS (Home Subscriber Server) im LTE (Long Term Evolution)-Netz entsprechen bzw. diese umfassen, d.h. die folgende Prozedur zum Verbindungsaufbau kann im Kommunikationsnetzwerk 303 ablaufen.

Zunächst erstellt die Management-Entität 319 Parameter, die für die Authentifizierung und in weiterer Folge für sicherheitsrelevante Abläufe, wie Verschlüsselung und Schutz der Integrität der Nachrichten, benötigt werden. Diese können ein zufälliger Wert RAND, ein Schlüssel K_{ASME}, das erwartete Ergebnis der Authentifizierungsüberprüfung XRES, sowie der Authentication Token AUTN sein. Diese 4 Parameter können als sogenannter Authentication Vector von der Management-Entität 319 an das entsprechende Subnetzwerk 307 geschickt werden.

RAND und AUTN können von der ersten Identifizierungsentität 309, beispielsweise über einen (nicht dargestellten) ersten Kommunikationsknoten, z.B. einen eNodeB (Basisstation) an das Kommunikationsendgerät 301, beispielsweise ein UE (User Equipment) gesendet werden. Der erste Kommunikationsknoten kann dabei zwischen Kommunikationsendgerät 301 und ersten Subnetzwerk 307 angeordnet sein, um eine Kommunikation des Kommunikationsendgeräts 301 zu der ersten Identifizierungsentität 309 zu ermöglichen. Ferner kann der erste Kommunikationsknoten mit weiteren Subnetzwerken 311, 315 verbunden sein, um eine Kommunikation des Kommunikationsendgerätes 301 zu weiteren Subnetzwerken 311, 315 zu ermöglichen. Der erste Kommunikationsknoten kann von dem Kommunikationsendgerät 301 beispielsweise über RAT (Radio Access Technology), z.B. WLAN, WiFi, Mobilfunk-Luftschnittstelle, etc. erreicht werden.

Das Kommunikationsendgerät 301 kann von einem auf der UICC gespeicherten geheimen Schlüssel ebenso einige Parameter, wie z.B. den K_{ASME}, ableiten, die es ihm erlauben, mithilfe des AUTN die Authentizität des Kommunikationsnetzes 303 zu überprüfen und aus RAND und K_{ASME} über einen bestimmten Algorithmus den Wert RES zu errechnen. Dieser Wert kann dann, beispielsweise über den ersten Kommunikationsknoten, zur ersten Identifizierungsentität 309 geschickt werden. Sind RES und XRES gleich, schickt die erste Identifizierungsentität 309 eine Nachricht an die Management-Entität 319, um dieser mitzuteilen, dass die Authentifizierung des Kommunikationsendgeräts 301 positiv abgeschlossen wurde. Die Management-Entität kann darauf hin eine Liste für dieses Kommunikationsendgerät 301 mit erlaubten Verbindungen (PDN Subscription Contexts mit QoS profiles) an die erste Identifizierungs-Entität 309 schicken.

Daraufhin kann die erste Identifizierungs-Entität 309 einen Default Träger (beispielsweise eine IP Verbindung) vom Kommunikationsendgerät 301 aufbauen, beispielsweise über ein Serving-Gateway (S-GW) zu eine Packet Data Network-Gateway (PDN-GW) und das Kommunikationsendgerät 301 über den erfolgreichen Einbuchungsvorgang informieren.

Nun kann das Kommunikationsendgerät 301 über das Kommunikationsnetzwerk 303 kommunizieren. Weitere Verbindungsanforderungen vom PDN-GW oder Kommunikationsendgerät 301 für zusätzliche Träger oder Modifikationen der bestehenden Träger können von der ersten Identifizierungs-Entität 309 auf Basis der von der Management-Entität 319 empfangenen Daten autorisiert werden.

Die Kommunikationsverbindung 310 kann über das zweite Subnetzwerk 311 aufgebaut werden, falls die der übermittelten Identifikation 302 zugeordnete Subnetzwerk-Kennung 306 die Subnetzwerk-Kennung 314 des zweiten Subnetzwerkes 311 ist.

Alternativ kann die Kommunikationsverbindung 310 über das n-te Subnetzwerk 315 aufgebaut werden, falls die der übermittelten Identifikation 302 zugeordnete Subnetzwerk-Kennung 306 die Subnetzwerk-Kennung 316 des n-ten Subnetzwerkes 315 ist.

Das Kommunikationsnetzwerk 303 kann ein Netzwerk einer fünften Generation (5G) oder einer weiteren Generation sein, und die Subnetzwerke 307, 311, 315 können Slices des Kommunikationsnetzwerkes 303 sein, wie oben zu den Figuren 1 und 2 beschrieben.

Die Management-Entität 319 kann die Zuordnung 321 der Subnetzwerk-Kennung 306 zu dem Kommunikationsendgerät 301 auf der Basis einer oder mehrerer der folgenden Zuordnungen bewirken: einer Zuordnung der Identifikation 302 des Kommunikationsendgerätes 301, beispielsweise einer Hardware-Kennung des Kommunikationsgerätes 301 wie IMSI oder IMEI oder eID zu der Subnetzwerk-Kennung 306 und/oder einer Zuordnung eines Kommunikationsdienstes zu dem Kommunikationsendgerät 301 und/oder einer Zuordnung einer Softwareanwendung zu dem Kommunikationsendgerät 301 und/oder eines Betriebssystems des Kommunikationsendgeräts 301 zu einem der beiden Subnetzwerke 307, 311. Subnetzwerke können unterschiedlichen Anwendungen oder Diensten zugeordnet sein, sodass das Kommunikationsendgerät 301 in weiterer Abhängigkeit hiervon über mehrere Subnetzwerke 307, 311, 315 kommunizieren kann. Die Subnetzwerke können sich voneinander durch unterschiedliche Funktionen, Dienste oder Anwendungen unterscheiden.

Neben der Zuordnung von Kommunikationsendgerät(en) 301 zu Subnetzwerkkennung kann die Management-Entität 319 auch eine Zuordnung von Subnetzwerk-Kennungen 312, 314, 316 zu Subnetzwerken 307, 311, 315 umfassen, die beispielsweise in einer Tabelle bzw. einem Speicher der Management-Entität 319 gespeichert sein können.

Das Kommunikationsendgerät 301 kann die Identifikation 302 des Kommunikationsgerätes 301 zusammen mit der Subnetzwerk-Kennung 306, welche das dem Kommunikationsendgerät 301 zugeordnete Subnetzwerk 307, 311, 315 anzeigt, an die erste Identifizierungsentität 309 oder die anderen Identifizierungsentitäten 313, 317 übermitteln. Die erste Identifizierungsentität 309 kann darauf die Identifikation 302 des Kommunikationsgerätes 301 und die Subnetzwerk-Kennung 312 des ersten Subnetzes 307 an die Management-Entität 319 übermitteln. Die gleiche Funktionalität gilt auch für die anderen Identifizierungsentitäten 313, 317.

Beim Zuordnen eines Subnetzwerkes zu dem Kommunikationsendgerät 301 kann die Management-Entität 319 die der Identifikation 302 des Kommunikationsgerätes 301 zugeordnete Subnetzwerk-Kennung 306 an die erste Identifizierungsentität 309 übermitteln. Falls die der Identifikation 302 des Kommunikationsendgerätes 301 zugeordnete Subnetzwerk-Kennung 306 und die Subnetzwerk-Kennung 312 des ersten Subnetzwerkes 307 unterschiedlich sind, kann die erste Identifizierungsentität 309 die übermittelte Subnetzwerk-Kennung 306 an das Kommunikationsendgerät 301 übermitteln. Falls die der Identifikation 302 des Kommunikationsendgerätes 301 zugeordnete Subnetzwerk-Kennung 306 und die Subnetzwerk-Kennung 312 des ersten Subnetzwerkes 307 unterschiedlich sind, kann die erste Identifizierungsentität 309 die übermittelte Subnetzwerk-Kennung 306 an die zweite Identifizierungsentität 313 übermitteln.

Beim Aufbauen der Kommunikationsverbindung 310 über das zweite Subnetzwerk 311 kann das Kommunikationsendgerät 301 die Identifikation 302 an die zweite Identifizierungsentität 313 übermitteln.

Beim Aufbauen der Kommunikationsverbindung 310 über das zweite Subnetzwerk 311 kann die zweite Identifizierungsentität 313 das Kommunikationsendgerät 301 auf der Basis der Identifikation 302 des Kommunikationsendgerätes 301 identifizieren. Nach erfolgter Identifikation des Kommunikationsendgerätes 301 können die folgenden Schritte ausgeführt werden: Zuordnen eines Subnetzwerkes 307, 311, 315 zu dem Kommunikationsendgerät 301 durch die Management-Entität 319 auf der Basis der Zuordnung 321 einer Subnetzwerk-Kennung zu dem Kommunikationsendgerät 301; und Aufbauen einer Kommunikationsverbindung 310 des Kommunikationsendgerätes über das zweite Subnetzwerk 311, falls die der Identifikation 302 des Kommunikationsendgerätes 301 zugeordnete Subnetzwerk-Kennung 306 der Subnetzwerk-Kennung 314 des zweiten Subnetzwerkes 311 entspricht. Alternativ kann ein Aufbauen einer Kommunikationsverbindung 318 des Kommunikationsendgerätes 301 über ein weiteres Subnetzwerk 315 des Kommunikationsnetzwerkes 303 oder ein Abweisen des Kommunikationsgerätes 301 erfolgen, falls die der Identifikation 302 des Kommunikationsendgerätes 301 zugeordnete Subnetzwerk-Kennung 306 und die Subnetzwerk-Kennung 314 des zweiten Subnetzwerkes 311 unterschiedlich sind.

Der Verbindungsaufbau kann hier rekursiv erfolgen. D.h. zuerst wird versucht, eine Kommunikation über das erste Subnetzwerk 307 aufzubauen. Falls dies nicht möglich ist aufgrund nicht passender Subnetzwerk-Kennung 306 des Kommunikationsendgerätes 301 wird versucht, eine Kommunikation über das zweite Subnetzwerk 3011 aufzubauen. Falls dies auch nicht möglich ist aufgrund nicht passender Subnetzwerk-Kennung 306 des Kommunikationsendgerätes 301 wird versucht, eine Kommunikation über ein weiteres, z.B. das n-te Subnetzwerk 315 aufzubauen. Falls dieser letzte Kommunikationsaufbau aufgrund nicht passender Subnetzwerk-Kennung 306 des Kommunikationsendgerätes 301 nicht möglich ist, wird der Kommunikationsaufbau abgewiesen. Alternativ kann der Kommunikationsaufbau auch schon früher abgewiesen werden, beispielsweise nach dem 1., 2., 3., n-ten nicht erfolgreichen Versuch.

Beim Aufbauen der jeweiligen Kommunikationsverbindung 308, 310, 318 kann das Kommunikationsendgerät 301 die der übermittelten Identifikation 302 zugeordnete Subnetzwerk-Kennung 306 an die erste 309 oder zweite 313 oder n-te 317 Identifizierungsentität übermitteln.

Die jeweilige Identifizierungsentität 309, 313, 317 oder die Management-Entität 319 kann ein Subnetzwerk 307, 311, 315 des Kommunikationsnetzes 303 dem Kommunikationsgerät 301 auf der Basis der übermittelten Subnetzwerk-Kennung 306 zuordnen, falls die übermittelte Subnetzwerk-Kennung 306 ein Subnetzwerk eines anderen Kommunikationsnetzwerkes, beispielsweise eines Fremdnetzes, anzeigt. Das Roaming kann hier über die jeweiligen Identifizierungsentitäten 309, 313, 317 erfolgen, die Funktion ist aus Sicht des besuchten Netzes beschrieben. Dabei kann die jeweilige Identifizierungsentität 309, 313 bzw. die Management-Entität 319 dasjenige Subnetzwerk 307, 311, 315 des Kommunikationsnetzes 303 dem Kommunikationsgerät 301 zuordnen, das dem Subnetzwerk des anderen Kommunikationsnetzes entspricht. Die Subnetzwerke in unterschiedlichen Kommunikationsnetzen können unterschiedliche Kennungen haben. Bei einer entsprechenden Zuordnung des Subnetzes im Kommunikationsnetzwerk 303 zu dem Kommunikationsendgerät 301, das dem entsprechenden Subnetz im Heimatnetz entspricht, d.h. beispielsweise dem Subnetz im Heimatnetz, das die gleichen Dienste bietet, kann das Roaming in Fremdnetzen erleichtert werden. Diese Zuordnung kann beispielsweise über Look-Up Tabellen erfolgen, die in der jeweiligen Identifizierungsentität 309, 313, 317 oder der Management-Entität 319 abgelegt oder gespeichert sein können. In einer Ausführungsform kann das Kommunikationsgerät im Kommunikationsnetz 303 roamen und hat in seinem Heimatnetz bzw. in einem anderen Kommunikationsnetz eine Zuordnung zu einem Slice, die hier im Kommunikationsnetz 303 nachgebildet wird.

Die Kommunikationsverbindung 308 über das erste Subnetzwerk 307 kann durch die erste Identifizierungsentität 309 aufgebaut werden; die Kommunikationsverbindung 310 über das zweite Subnetzwerk 311 kann durch die zweite Identifizierungsentität 313 aufgebaut werden. Die Kommunikationsverbindung 318 über das n-te Subnetzwerk 315 kann durch die n-te Identifizierungsentität 317 aufgebaut werden. Alternativ können diese Kommunikationsverbindungen 308, 310, 318 auch mit Hilfe des Kommunikationsendgerätes 301 aufgebaut werden.

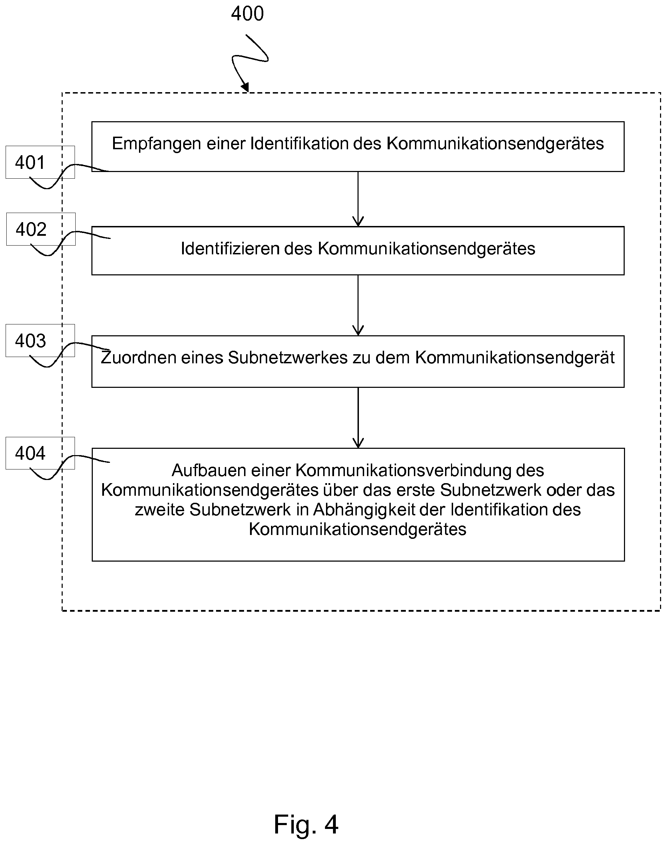

Fig. 4 zeigt eine schematische Darstellung eines Verfahrens 400 zum Aufbauen einer Kommunikationsverbindung eines Kommunikationsendgerätes über ein Kommunikationsnetzwerk gemäß einer beispielhaften Ausführungsform.

Das Kommunikationsnetzwerk kann dem oben zu Figur 3 beschriebenen Kommunikationsnetzwerk 303 entsprechen. D.h., das Kommunikationsnetzwerk 303 umfasst eine Mehrzahl von Subnetzwerken 307, 311, 315 mit einem ersten Subnetzwerk 307, einem zweiten Subnetzwerk 311 und einem n-ten Subnetzwerk 315. In dem ersten Subnetzwerk 307 ist eine erste Identifizierungsentität 309 zur Identifizierung des Kommunikationsgerätes 301 angeordnet, in dem zweiten Subnetzwerk 311 ist eine zweite Identifizierungsentität 313 zur Identifizierung des Kommunikationsgerätes 301 angeordnet und in dem n-ten Subnetzwerk 315 ist eine n-te Identifizierungsentität 317 zur Identifizierung des Kommunikationsgerätes 301 angeordnet. Jedem Subnetzwerk 307, 311, 315 des Kommunikationsnetzwerkes 303 ist eine Subnetzwerk-Kennung zugeordnet. In dem Kommunikationsnetzwerk 303 ist eine Management-Entität 319 angeordnet, welche eine Zuordnung 321 des Kommunikationsendgerätes 301 zu einem der Subnetzwerke 307, 311, 315 verwaltet.

Das Verfahren 400 umfasst ein Empfangen 401 einer Identifikation 302 des Kommunikationsendgerätes 301 durch die erste Identifizierungsentität 309 des ersten Subnetzwerkes 307, wobei die Identifikation 302 das Kommunikationsendgerät 301 identifiziert, beispielsweise entsprechend der Beschreibung zu Figur 3.

Das Verfahren 400 umfasst ferner ein Identifizieren 402 des Kommunikationsendgerätes 301 durch die erste Identifizierungsentität 309 auf der Basis der Identifikation 302 des Kommunikationsendgerätes 301.

Das Verfahren 400 umfasst ferner ein Zuordnen 403 eines Subnetzwerkes zu dem Kommunikationsendgerät 301 durch die Management-Entität 319 auf der Basis einer Zuordnung 321 einer Subnetzwerk-Kennung 306 zu dem Kommunikationsendgerät 301.

Das Verfahren 400 umfasst ferner ein Aufbauen 404 einer Kommunikationsverbindung 308 des Kommunikationsendgerätes 301 über das erste Subnetzwerk 307, falls die der Identifikation 302 des Kommunikationsendgerätes 301 zugeordnete Subnetzwerk-Kennung 306 der Subnetzwerk-Kennung 312 des ersten Subnetzwerkes 307 entspricht; oder ein Aufbauen einer Kommunikationsverbindung 310 des Kommunikationsendgerätes 301 über das zweite Subnetzwerk 311, falls die der übermittelten Identifikation 302 zugeordnete Subnetzwerk-Kennung 306 und die Subnetzwerk-Kennung 312 des ersten Subnetzwerkes 307 unterschiedlich sind.

Die Kommunikationsverbindung 310 kann über das zweite Subnetzwerk 315 aufgebaut werden, falls die der übermittelten Identifikation 302 zugeordnete Subnetzwerk-Kennung 306 die Subnetzwerk-Kennung 314 des zweiten Subnetzwerkes ist.

Das Kommunikationsnetzwerk 303 kann ein Netzwerk einer fünften Generation (5G) oder einer weiteren Generation sein, und die Subnetzwerke 307, 311, 315 können Slices des Kommunikationsnetzwerkes 303 sein, wie oben zu den Figuren 1 und 2 beschrieben.

Die Management-Entität 319 kann die Zuordnung 321 der Subnetzwerk-Kennung 306 zu dem Kommunikationsendgerät 301 auf der Basis zumindest einer der folgenden Zuordnungen bewirken: einer Zuordnung der Identifikation 302 des Kommunikationsendgerätes 301, insbesondere einer Hardware-Kennung des Kommunikationsgerätes 301 wie IMSI oder IMEI oder eID zu der Subnetzwerk-Kennung 306, und/oder einer Zuordnung eines Kommunikationsdienstes zu dem Kommunikationsendgerät 301 und/oder einer Zuordnung einer Softwareanwendung zu dem Kommunikationsendgerät 301, und/oder eines Betriebssystems des Kommunikationsendgeräts (301) zu einem der beiden Subnetzwerke 307, 311, beispielsweise entsprechend der Beschreibung zu Figur 3.

Das Kommunikationsendgerät 301 kann die Identifikation 302 des Kommunikationsgerätes 301 zu der ersten 309, der zweiten 313, oder der n-ten 317 Identifizierungsentität zusammen mit der Subnetzwerk-Kennung 306, welche das dem Kommunikationsendgerät 301 zugeordnete Subnetzwerk 307, 311, 315 anzeigt, übermitteln, beispielsweise wie oben zu Figur 3 beschrieben.

Die erste Identifizierungsentität 309 kann die Identifikation 302 des Kommunikationsgerätes 301 und die Subnetzwerk-Kennung 312 des ersten Subnetzes 307 an die Management-Entität 319 übermitteln, beispielsweise wie oben zu Figur 3 beschrieben.

In dem Schritt des Zuordnens 403 kann die Management-Entität 319 die der Identifikation 302 des Kommunikationsgerätes 301 zugeordnete Subnetzwerk-Kennung 306 an die erste Identifizierungsentität 309 übermitteln. Falls die der Identifikation 302 des Kommunikationsendgerätes 301 zugeordnete Subnetzwerk-Kennung 306 und die Subnetzwerk-Kennung 312 des ersten Subnetzwerkes 307 unterschiedlich sind, kann die erste Identifizierungsentität 309 die übermittelte Subnetzwerk-Kennung 306 an das Kommunikationsendgerät 301 übermitteln. Alternativ, falls die der Identifikation 302 des Kommunikationsendgerätes 301 zugeordnete Subnetzwerk-Kennung 306 und die Subnetzwerk-Kennung 312 des ersten Subnetzwerkes 307 unterschiedlich sind, kann die erste Identifizierungsentität 309 die übermittelte Subnetzwerk-Kennung 306 an die zweite Identifizierungsentität 313 übermitteln, beispielsweise wie oben zu Figur 3 beschrieben.

In dem Schritt des Aufbauens 404 der Kommunikationsverbindung 310 über das zweite Subnetzwerk 311 kann das Kommunikationsendgerät 301 die Identifikation 302 an die zweite Identifizierungsentität 313 übermitteln, beispielsweise wie oben zu Figur 3 beschrieben.

In dem Schritt des Aufbauens 404 der Kommunikationsverbindung 310 über das zweite Subnetzwerk 311 kann die zweite Identifizierungsentität 313 das Kommunikationsendgerät 301 auf der Basis der Identifikation 302 des Kommunikationsendgerätes 301 identifizieren, beispielsweise wie oben zu Figur 3 beschrieben.

Nach erfolgter Identifikation des Kommunikationsendgerätes 301 können die folgenden weiteren Schritte ausgeführt werden: Zuordnen eines Subnetzwerkes 307, 311, 315 zu dem Kommunikationsendgerät 301 durch die Management-Entität auf der Basis der Zuordnung 321 einer Subnetzwerk-Kennung zu dem Kommunikationsendgerät 301; und Aufbauen einer Kommunikationsverbindung 310 des Kommunikationsendgerätes über das zweite Subnetzwerk 311, falls die der Identifikation 302 des Kommunikationsendgerätes 301 zugeordnete Subnetzwerk-Kennung 306 der Subnetzwerk-Kennung 314 des zweiten Subnetzwerkes 311 entspricht; oder Aufbauen einer Kommunikationsverbindung 318 des Kommunikationsendgerätes 301 über ein weiteres Subnetzwerk 315 des Kommunikationsnetzwerkes 303 oder Abweisen des Kommunikationsgerätes 301, falls die der Identifikation 302 des Kommunikationsendgerätes 301 zugeordnete Subnetzwerk-Kennung 306 und die Subnetzwerk-Kennung 314 des zweiten Subnetzwerkes 311 unterschiedlich sind, beispielsweise wie oben zu Figur 3 beschrieben.

In dem Schritt des Aufbauens 404 der jeweiligen Kommunikationsverbindung 308, 310, 318 kann das Kommunikationsendgerät 301 die der übermittelten Identifikation 302 zugeordnete Subnetzwerk-Kennung 306 an die erste 309, die zweite 313 oder die n-te 317 Identifizierungsentität übermitteln, beispielsweise wie oben zu Figur 3 beschrieben.

Die jeweilige Identifizierungsentität 309, 313, 317 oder die Management-Entität 319 können ein Subnetzwerk 307, 311, 315 des Kommunikationsnetzes 303 dem Kommunikationsgerät 301 auf der Basis der übermittelten Subnetzwerk-Kennung 306 zuordnen, falls die übermittelte Subnetzwerk-Kennung 306 ein Subnetzwerk eines anderen Kommunikationsnetzwerkes anzeigt, beispielsweise wie oben zu Figur 3 beschrieben.

Die jeweilige Identifizierungsentität 309, 313, 317 oder die Management-Entität 319 können dasjenige Subnetzwerk 307, 311, 315 des Kommunikationsnetzes 303 dem Kommunikationsgerät 301 zuordnen, das dem Subnetzwerk des anderen Kommunikationsnetzes entspricht, beispielsweise wie oben zu Figur 3 beschrieben.

Die Kommunikationsverbindung 308 kann über das erste Subnetzwerk 307 durch die erste Identifizierungsentität 309 aufgebaut werden und die Kommunikationsverbindung 310 über das zweite Subnetzwerk 311 kann durch die zweite Identifizierungsentität 313 aufgebaut werden, beispielsweise wie oben zu Figur 3 beschrieben.

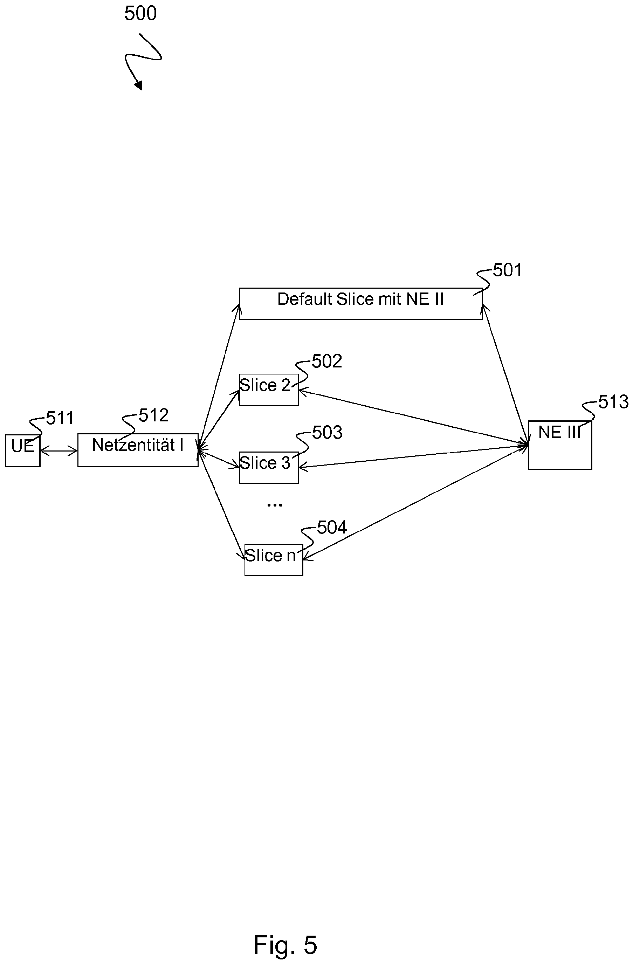

Fig. 5 zeigt eine schematische Darstellung des Einbuchungsvorgangs eines Kommunikationsendgerätes in ein Kommunikationsnetz am Beispiel eines 5G-Netzes 500 gemäß einer beispielhaften Ausführungsform. Das 5G-Netz 500 umfasst ein UE 511, eine erste Netzentität 512 bzw. Netzwerkentität, eine Mehrzahl von Slices 501, 502, 503, 504, denen jeweils eine zweite Netzentität zugeordnet ist, und eine dritte Netzentität 513. Das UE (User Equipment) ist ein Beispiel eines wie oben zu den Figuren 3 und 4 beschriebenen Kommunikationsendgeräts 301. Die erste Netzentität 512 kann dem oben zu Figur 3 beschriebenen ersten Kommunikationsknoten entsprechen. Es kann sich dabei beispielsweise um einen eNodeB bzw. eine Basisstation handeln. Die Slices 501, 502, 503, 504 können den oben zu Figuren 3 und 4 beschriebenen Subnetzwerken 307, 311, 315 entsprechen oder den zu Figur 2 beschriebenen Netzwerk Slices 210b, 211b, 212b oder Instanzen 210a, 211a, 212a dieser Netzwerk Slices entsprechen. Die erste Slice 501 ist hier beispielhaft als Default Slice beschrieben. Natürlich kann auch jede andere der Slices 502, 503, 504 als Default Slice spezifiziert sein. Die dritte Netzentität 513 kann der oben zu Figur 3 und 4 beschriebenen Netzwerkentität 319 entsprechen. Sie kann beispielsweise in der in Figur 1 beschriebenen Management & Instrumentierungsebene 106 angeordnet sein. Die dritte Netzentität 513 kann unter anderen auch die Aufgaben eines HSS gemäß LTE Terminologie wahrnehmen. Die jeweiligen zweiten Netzentitäten, die den Slices 501, 502, 503, 504 zugeordnet sind, können unter anderen auch die Aufgaben einer MME gemäß LTE Terminologie wahrnehmen.

In einer Ausführungsform ist die Struktur des 5G-Netzes 500 ähnlich der Struktur eines LTE-Netzes. Allerdings hat das Heimatnetz mehrere Subnetze 501, 502, 503, 504, welche als Slices bezeichnet werden. Das UE ist somit nicht nur dem Heimatnetz (über die dritte Netzentität 513, vergleichbar dem HSS), sondern auch dem jeweiligen Slice zugeordnet. Die zweiten Netzentitäten können in Analogie zu einem MME gemäß LTE-Terminologie zugleich Teil des Default-Slices 501 sein, was von der genauen Funktion abhängig ist. Die Subnetze 501, 502, 503, 504 können dann jeweils eine Verbindung zur dritten Netzentität 513 in Analogie zu dem HSS gemäß LTE haben, wie hier in Figur 5 dargestellt.

Im Folgenden wird ein beispielhafter Einbuchungsvorgang in das 5G Netz 500 beschrieben.

Das UE 511 verbindet sich über die erste Netzentität 512 mit der zweiten Netzentität des Default Slice 501. Die zweite Netzentität des Default Slice 501 identifiziert das UE 511 anhand der IMSI oder eines damit verknüpften temporären Identifizierungsmerkmals und leitet die Anforderung des UE 511 sich ins Netz einzubuchen zur dritten Netzentität 513. Zunächst erstellt die dritte Netzentität 513 Parameter, die für die Authentifizierung und in weiterer Folge für sicherheitsrelevante Abläufe, wie Verschlüsselung und Schutz der Integrität der Nachrichten, benötigt werden. Diese sind ein zufälliger Wert RAND, ein Schlüssel K_{ASME}, das erwartete Ergebnis der Authentifizierungsüberprüfung XRES, sowie der Authentication Token AUTN. Diese 4 Parameter werden als sogenannter Authentication Vector bzw. Authentifizierungsvektor von der dritten Netzentität 513 an die zweite Netzentität des Default Slice 501 geschickt. RAND und AUTN werden von der zweiten Netzentität des Default Slice 501 über die erste Netzentität 512 an das UE 511 gesendet. Das UE 511 kann von einem auf der UICC gespeicherten geheimen Schlüssel ebenso einige Parameter, wie z.B. den K_{ASME}, ableiten, die es ihm erlauben, mithilfe des AUTN die Authentizität des Netzes zu überprüfen und aus RAND und K_{ASME} über einen bestimmten Algorithmus den Wert RES zu errechnen. Dieser Wert wird über die erste Netzentität 512 zur zweiten Netzentität der Default Slice 501 geschickt. Sind RES und XRES gleich, schickt die zweite Netzentität der Default Slice 501 eine Nachricht an die dritte Netzentität 513, um dieser mitzuteilen, dass die Authentifizierung des UE 511 positiv abgeschlossen wurde. Die dritte Netzentität 513 schickt daraufhin eine Liste für dieses UE 511 erlaubter Verbindungen, z.B. PDN (Packet Data Network) Subscription Contexts mit QoS (Quality of Service) Profilen, an die zweite Netzentität der Default Slice 501.

Daraufhin baut die zweite Netzentität des Default Slice 501 einen Default Bearer bzw. Träger (z.B. eine IP Verbindung) vom UE 511 zu beispielsweise einem PDN-GW über beispielsweise ein S-GW auf und informiert das UE 511 über den erfolgreichen Einbuchungsvorgang. Nun kann das UE 511 über das Kommunikationsnetzwerk kommunizieren. Weitere Verbindungsanforderungen vom PDN-GW oder UE 511 für zusätzliche Bearer oder Modifikationen der bestehenden Bearer können von der zweiten Netzentität der Default Slice 501 auf Basis der von der dritten Netzentität 513 empfangenen Daten autorisiert werden.

Alle Subnetze (Slices) 501, 502, 503, 504 sind vordefiniert sowohl hinsichtlich der Subnetzstruktur (d.h. welche Funktionalitäten vorhanden sind, welche Netztopologie definiert ist) als auch hinsichtlich der Funktionalität.

Die Netzentitäten II (auf Default Slice 501) und III 513 sind der Control Plane zugeordnet. Die Netzentität I 512 ist sowohl Control Plane als auch User Plane zugeordnet, beispielsweise kann die Signalisierung zwischen Netzentität I 512 und Netzentität II (auf Default Slice 501) auf der Control Plane (CP) laufen, während die Nutzerdaten zwischen Netzentität I 512 und S-GW und PDN-GW auf der User Plane (UP) laufen können. Die Subnetze 501, 502, 503, 504 laufen logisch in der Netzentität III 513 zusammen. Für die Netzentität II gibt es mehrere Möglichkeiten: Falls der Funktionsumfang ähnlich der MME gemäß LTE Terminologie ist, dann ist Netzentität II ein Teil des Default-Slices 501, wie in Figur 5 dargestellt. In jedem Fall gibt es den folgenden 2-stufigen Prozess:
a) Das UE 511 versucht sich einzubuchen, wird wie oben beschrieben von Netzentität II und III 513 voll authentifiziert und entweder einem anderen Slice zugewiesen oder im Default-Slice 501 belassen. Dieser Default Slice 501 kann in einer Ausgestaltung ein Standard Multimedia Broadband Netz sein.
b) Wenn das UE 511 einem anderen Slice zugewiesen wird, wiederholt die Netzentität I 512 den Einbuchungsvorgang in Richtung des zugewiesenen Slice (und der Netzentität II darin) und das UE 511 wird bei Erfolg aus dem Default-Slice 501 abgemeldet.

Dies kann vom Ablauf beispielsweise einem Tracking Area Update gemäß LTE Terminologie entsprechen, also dem Verfahren, das durchgeführt wird, wenn das UE 511 vom Bereich eines MME/S-GW in den eines anderen MME/S-GWs kommt, wobei aber die Netzentität I 512 im Unterschied dazu (wo der eNodeB eines Netzes nur mit einem MME verbunden ist) aufgrund der Subnetz Kennung eine andere Netzentität II auswählen kann.

In einer Implementierungsform kann man es in a) oder b) oder in a) und b) zu einer Authentifizierung des UE 511 kommen. Dies kann etwa ähnlich dem oben beschriebenen Tracking Area Update gestaltet werden.

In einer Implementierungsform besitzt die Netzentität II nur die Funktionalität, die notwendig ist um mit der Netzentität III 513 den Slice zu bestimmen. Dann ist sie nicht Teil des Default-Slices und es erfolgt immer ein Schritt b).

Die Netzentität III 513 identifiziert anhand beispielsweise der IMSI das UE 511 und ordnet dem UE 511 den dazugehörigen Slice, beispielsweise Subnetz I 501 zu. Die Zuweisung des Slice erfolgt aufgrund der in der Netzentität III gespeicherten Daten sowie ggf. unter Einbeziehung von Parametern, die beim Einbuchen vom UE 511 an die Netzentität II übertragen werden. Das können Hardwarekennungen sein (z.B. die IMEI), Operating System Infos oder Applikations-IDs.

In einer alternativen Variante übermittelt das UE 511 die Kennung des entsprechenden Subnetzes im zweiten Schritt b). Das ist die Kennung, die es im ersten Schritt a) von Netzentität III über Netzentität II bekommen hat. Daraufhin wiederholt das UE 511 in Schritt b) den Einbuchungsvorgang in Richtung des zugewiesenen Slice. D.h. in dieser Alternative laufen die Slices im UE 511 zusammen, nicht in Netzentität I 512.

In dieser alternativen Variante kann das UE 511 dann statt der eigenen ID (z.B. IMSI) die eigene ID mit der Slice ID in jedem Verbindungsaufbau mitgeben. Damit kann dann immer die richtige Netzentität II gewählt werden, die Netzentität I 512 muss keinen Status zum UE 511 speichern und das UE 511 kann auch Teil von mehreren Slices sein. Das vereinfacht auch die Prozeduren bei einem Wechsel der Netzentität I 512.

In einer weiteren alternativen Variante übermittelt das UE 511 die Kennung des Subnetzes von Anfang an. Das Subnetz kann beispielsweise ein S-GW (analog), ein PDN-GW (analog) etc. enthalten. Diese Netzentitäten werden für das UE 511 parametriert. Das erfolgt über die Netzentität II bei Bedarf ― wenn z.B. ein neuer Bearer aufgebaut wird.

Nach erfolgter Zuweisung des Slices und Einbuchen im selbigen ist die Netzentität II, die als erster Kontaktpunkt für das Einbuchen gedient hat, nicht mehr in den Signalisierungsfluss eingebunden (außer das UE 511 bleibt im Default-Slice 501 und Netzentität II ist Teil des Default-Slices 501).

Nach der Parametrisierung kann das UE 511 über das Subnetz I 501 beispielsweise im Internet kommunizieren oder sich im IMS registrieren und Telekommunikations-Dienste nutzen (z.B. Telefonie).

Die Subnetze I bis n 501, 502, 503, 504 sind voneinander entkoppelt.

Das obige Konzept gilt analog für die Einbuchung in einem fremden Netz. Hier übernimmt analog die Netzentität III die Auswahl des Subnetzes und die Parameter. Im fremden Netz wird die Netzentität II im besuchten Netz dasjenige vordefinierte Subnetz des fremden Netzes auswählen, das dem Heimat-Subnetz entspricht (beispielsweise über Look-Up-Tabelle).

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 4 beschriebene Verfahren 400 oder die zu den Figuren 3 und 5 beschriebenen Vorgänge ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 400 auszuführen oder die Netzkomponenten der in den Figuren 1 bis 5 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 5 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen. Die Erfindung ist dabei definiert durch die folgenden Ansprüche.

### Bezugszeichenliste

- 100:: 5G Systemarchitektur
- 101:: Zugangsgerät, Kommunikationsendgerät, UE
- 102:: Zugangstechnologie
- 103:: Anwendungsschicht
- 104:: Aktivierungsschicht
- 105:: Infrastruktur & Ressourcenschicht
- 106:: Management & Instrumentierungsschicht

- 200:: 5G Kommunikationsnetzwerk mit mehreren Slices
- 210a:: erste Slice Instanz
- 210b:: erste Netzwerk Slice
- 211a:: zweite Slice Instanz
- 211b:: zweite Netzwerk Slice
- 212a:: dritte Slice Instanz
- 212b:: dritte Netzwerk Slice
- 213:: Slice Komposition
- 221:: abstrahierte Objekte
- 222:: virtuelle Netzwerkfunktionen
- 223:: kombinierte Objekte
- 224:: aggregierte Objekte
- 225:: Objektbibliothek
- 231:: Zugangsknoten
- 232:: Zugangsknoten
- 233:: Zugangsknoten
- 234:: virtueller Netzwerkknoten
- 235:: virtueller Netzwerkknoten
- 236:: virtueller Netzwerkknoten
- 237:: virtueller Netzwerkknoten
- 238:: Computerknoten
- 239:: Computerknoten
- 240:: Computerknoten
- 251:: Infrastrukturdienste
- 300:: Kommunikationssystem
- 301:: Kommunikationsendgerät, z.B. UE
- 302:: Identifikation des Kommunikationsendgeräts
- 303:: Kommunikationsnetzwerk
- 304:: Verbindung zwischen 1. Subnetzwerk und Management-Entität
- 305:: Kommunikationsschnittstelle
- 306:: Subnetzwerkkennung des Kommunikationsendgeräts
- 307:: 1. Subnetzwerk
- 308:: Verbindungsaufbau über 1. Subnetzwerk
- 309:: 1. Identifizierungsentität
- 310:: Verbindungsaufbau über 2. Subnetzwerk
- 311:: 2. Subnetzwerk
- 312:: 1. Subnetzwerkkennung
- 313:: 2. Identifizierungsentität
- 314:: 2. Subnetzwerkkennung
- 315:: n. Subnetzwerk
- 316:: n. Subnetzwerkkennung
- 317:: n. Identifizierungsentität
- 318:: Verbindungsaufbau über n. Subnetzwerk
- 319:: Management-Entität
- 321:: Zuordnung Kommunikationsendgerät zu Subnetzwerkkennung

- 400:: Verfahren zum Aufbauen einer Kommunikationsverbindung
- 401:: erste Schritt: Empfangen
- 402:: zweiter Schritt: Identifizieren
- 403:: dritter Schritt: Zuordnen
- 404:: vierter Schritt: Aufbauen

- 500:: 5G Kommunikationsnetz
- 501:: Default Slice mit Netzentität II bzw. zweiter Netzentität
- 502:: Slice 2
- 503:: Slice 3
- 504:: Slice n
- 511:: UE bzw. Kommunikationsendgerät
- 512:: erste Netzentität bzw. Netzentität I
- 513:: dritte Netzentität bzw. Netzentität III

## Patentansprüche

1. Verfahren (400) zum Aufbauen einer Kommunikationsverbindung eines Kommunikationsendgerätes (301) über ein Kommunikationsnetzwerk (303), wobei das Kommunikationsnetzwerk (303) eine Mehrzahl von Subnetzwerken (307, 311, 315) mit einem ersten Subnetzwerk (307) und einem zweiten Subnetzwerk (311) aufweist, wobei in dem ersten Subnetzwerk (307) eine erste Identifizierungsentität (309) und in dem zweiten Subnetzwerk (311) eine zweite Identifizierungsentität (313) zur Identifizierung des Kommunikationsgerätes (301) angeordnet sind, wobei jedem Subnetzwerk (307, 311) des Kommunikationsnetzwerkes (303) eine Subnetzwerk-Kennung zugeordnet ist, wobei in dem Kommunikationsnetzwerk (303) eine Management-Entität (319) angeordnet ist, welche eine Zuordnung (321) des Kommunikationsendgerätes (301) zu einem der beiden Subnetzwerke (307, 311) verwaltet, und wobei das Verfahren (400) die folgenden Schritte umfasst:
Empfangen (401) einer Identifikation (302) des Kommunikationsendgerätes (301) durch die erste Identifizierungsentität (309) des ersten Subnetzwerkes (307), wobei die Identifikation (302) das Kommunikationsendgerät (301) identifiziert;
Identifizieren (402) des Kommunikationsendgerätes (301) durch die erste Identifizierungsentität (309) auf der Basis der Identifikation (302) des Kommunikationsendgerätes (301);
Zuordnen (403) eines Subnetzwerkes zu dem Kommunikationsendgerät (301) durch die Management-Entität (319) auf der Basis einer Zuordnung (321) einer Subnetzwerk-Kennung (306) zu dem Kommunikationsendgerät (301); und
Aufbauen (404) einer Kommunikationsverbindung (308) des Kommunikationsendgerätes (301) über das erste Subnetzwerk (307), falls die der Identifikation (302) des Kommunikationsendgerätes (301) zugeordnete Subnetzwerk-Kennung (306) der Subnetzwerk-Kennung (312) des ersten Subnetzwerkes (307) entspricht; oder Aufbauen einer Kommunikationsverbindung (310) des Kommunikationsendgerätes (301) über das zweite Subnetzwerk (311), falls die der übermittelten Identifikation (302) zugeordnete Subnetzwerk-Kennung (306) und die Subnetzwerk-Kennung (312) des ersten Subnetzwerkes (307) unterschiedlich sind,
**dadurch gekennzeichnet,**
**dass** in dem Schritt des Zuordnens (403) die Management-Entität (319) die der Identifikation (302) des Kommunikationsgerätes (301) zugeordnete Subnetzwerk-Kennung (306) an die erste Identifizierungsentität (309) übermittelt, und wobei, falls die der Identifikation (302) des Kommunikationsendgerätes (301) zugeordnete Subnetzwerk-Kennung (306) und die Subnetzwerk-Kennung (312) des ersten Subnetzwerkes (307) unterschiedlich sind, die erste Identifizierungsentität (309) die übermittelte Subnetzwerk-Kennung (306) an das Kommunikationsendgerät (301) übermittelt oder, falls die der Identifikation (302) des Kommunikationsendgerätes (301) zugeordnete Subnetzwerk-Kennung (306) und die Subnetzwerk-Kennung (312) des ersten Subnetzwerkes (307) unterschiedlich sind, die erste Identifizierungsentität (309) die übermittelte Subnetzwerk-Kennung (306) an die zweite Identifizierungsentität (313) übermittelt,
wobei die Kommunikationsverbindung (310) über das zweite Subnetzwerk (315) aufgebaut wird, falls die der übermittelten Identifikation (302) zugeordnete Subnetzwerk-Kennung (306) die Subnetzwerk-Kennung (314) des zweiten Subnetzwerkes ist.

2. Verfahren (400) nach Anspruch 1, wobei das Kommunikationsnetzwerk (303) ein Netzwerk einer fünften Generation (5G) oder einer weiteren Generation ist, und wobei die Subnetzwerke (307, 311, 315) Slices des Kommunikationsnetzwerkes (303) sind.

3. Verfahren (400) nach einem der vorstehenden Ansprüche, wobei die Management-Entität (319) die Zuordnung (321) der Subnetzwerk-Kennung (306) zu dem Kommunikationsendgerät (301) auf der Basis zumindest einer der folgenden Zuordnungen bewirkt: einer Zuordnung der Identifikation (302) des Kommunikationsendgerätes (301), insbesondere einer Hardware-Kennung des Kommunikationsgerätes (301) wie IMSI oder IMEI oder eID zu der Subnetzwerk-Kennung (306), und/oder einer Zuordnung eines Kommunikationsdienstes zu dem Kommunikationsendgerät (301) und/oder einer Zuordnung einer Softwareanwendung zu dem Kommunikationsendgerät (301), und/oder eines Betriebssystems des Kommunikationsendgeräts (301) zu einem der beiden Subnetzwerke (307,311).

4. Verfahren (400) nach einem der vorstehenden Ansprüche, wobei eine Zuordnung (321) von Subnetzwerk-Kennungen (312, 314, 316) zu Subnetzwerken (307, 311, 315) in der Management-Entität (319) gespeichert ist.

5. Verfahren (400) nach einem der vorstehenden Ansprüche, wobei das Kommunikationsendgerät (301) die Identifikation (302) des Kommunikationsgerätes (301) zu der ersten (309) oder der zweiten (313) Identifizierungsentität zusammen mit der Subnetzwerk-Kennung (306), welche das dem Kommunikationsendgerät (301) zugeordnete Subnetzwerk (307, 311) anzeigt, übermittelt.

6. Verfahren (400) nach Anspruch 5, wobei die erste Identifizierungsentität (309) die Identifikation (302) des Kommunikationsgerätes (301) und die Subnetzwerk-Kennung (312) des ersten Subnetzes (307) an die Management-Entität (319) übermittelt.

7. Verfahren (400) nach einem der vorstehenden Ansprüche, wobei in dem Schritt des Aufbauens (404) der Kommunikationsverbindung (310) über das zweite Subnetzwerk (311) das Kommunikationsendgerät (301) die Identifikation (302) an die zweite Identifizierungsentität (313) übermittelt.

8. Verfahren (400) nach Anspruch 7, wobei in dem Schritt des Aufbauens (404) der Kommunikationsverbindung (310) über das zweite Subnetzwerk (311) die zweite Identifizierungsentität (313) das Kommunikationsendgerät (301) auf der Basis der Identifikation (302) des Kommunikationsendgerätes (301) identifiziert, und wobei nach erfolgter Identifikation des Kommunikationsendgerätes (301) die folgenden Schritte ausgeführt werden:
Zuordnen eines Subnetzwerkes (307, 311, 315) zu dem Kommunikationsendgerät (301) durch die Management-Entität (319) auf der Basis der Zuordnung (321) einer Subnetzwerk-Kennung zu dem Kommunikationsendgerät (301); und
Aufbauen einer Kommunikationsverbindung (310) des Kommunikationsendgerätes über das zweite Subnetzwerk (311), falls die der Identifikation (302) des Kommunikationsendgerätes (301) zugeordnete Subnetzwerk-Kennung (306) der Subnetzwerk-Kennung (314) des zweiten Subnetzwerkes (311) entspricht; oder
Aufbauen einer Kommunikationsverbindung (318) des Kommunikationsendgerätes (301) über ein weiteres Subnetzwerk (315) des Kommunikationsnetzwerkes (303) oder Abweisen des Kommunikationsgerätes (301), falls die der Identifikation (302) des Kommunikationsendgerätes (301) zugeordnete Subnetzwerk-Kennung (306) und die Subnetzwerk-Kennung (314) des zweiten Subnetzwerkes (31 1) unterschiedlich sind.

9. Verfahren (400) nach einem der vorstehenden Ansprüche, wobei in dem Schritt des Aufbauens (404) der jeweiligen Kommunikationsverbindung (308, 310) das Kommunikationsendgerät (301) die der übermittelten Identifikation (302) zugeordnete Subnetzwerk-Kennung (306) an die erste (309) oder an die zweite (313) Identifizierungsentität übermittelt.

10. Verfahren (400) nach Anspruch 9, wobei die jeweilige Identifizierungsentität (309, 313) oder die Management-Entität (319) ein Subnetzwerk (307, 311, 315) des Kommunikationsnetzes (303) dem Kommunikationsgerät (301) auf der Basis der übermittelten Subnetzwerk-Kennung (306) zuordnet, falls die übermittelte Subnetzwerk-Kennung (306) ein Subnetzwerk eines anderen Kommunikationsnetzwerkes anzeigt.

11. Verfahren (400) nach Anspruch 10, wobei die jeweilige Identifizierungsentität (309, 313) oder die Management-Entität (319) dasjenige Subnetzwerk (307, 311, 315) des Kommunikationsnetzes (303) dem Kommunikationsgerät (301) zuordnet, das dem Subnetzwerk des anderen Kommunikationsnetzes entspricht.

12. Verfahren (400) nach einem der vorstehenden Ansprüche, wobei die Kommunikationsverbindung (308) über das erste Subnetzwerk (307) durch die erste Identifizierungsentität (309) aufgebaut wird, und
wobei die Kommunikationsverbindung (310) über das zweite Subnetzwerk (311) durch die zweite Identifizierungsentität (313) aufgebaut wird.

13. Kommunikationssystems (300) umfassend ein Kommunikationsendgerät (301) und ein Kommunikationsnetz (303) wobei das Kommunikationssystem (300) eingerichtet ist die Schritte des Verfahrens nach einem der Ansprüche 1 -12 durchzuführen.

## Claims

1. Method (400) for establishing a communication link between a communication end device (301) terminal via a communication network (303), wherein the communication network (303) has a plurality of subnetworks (307, 311, 315), with a first subnetwork (307) and a second subnetwork (311), wherein a first identification entity (309) is arranged in the first subnetwork (307) and a second identification entity (313) is arranged in the second subnetwork (311) in order to identify the communication device (301), wherein a subnetwork identifier is assigned to each subnetwork (307, 311) of the communication network (303), wherein a management entity (319) is arranged in the communication network (303) and manages an assignment (321) of the communication end device (301) to one of the two subnetworks (307, 311), and wherein the method (400) comprises the following steps:
Receiving (401) an identification (302) of the communication end device (301) by the first identification entity (309) of the first subnetwork (307), wherein the identification (302) identifies the communication end device (301);
Identifying (402) the communication end device (301) by the first identification entity (309) on the basis of the identification (302) of the communication end device (301);
Assigning (403) a subnetwork to the communication end device (301) by the management entity (319) on the basis of an assignment (321) of a subnetwork identifier (306) to the communication end device (301), and;
Establishing (404) a communication link (308) with the communication end device (301) via the first subnetwork (307) if the subnetwork identifier (306) assigned to the identification (302) of the communication end device (301) corresponds to the subnetwork identifier (312) of the first subnetwork (307); or establishing a communication link (310) with the communication end device (301) via the second subnetwork (311) if the subnetwork identifier (306) assigned to the transmitted identification (302) and the subnetwork identifier (312) of the first subnetwork (307) are different,
**characterized in that**
in the assignment step (403), the management entity (319) transmits the subnetwork identifier (306) assigned for identification (302) of the communication end device (301) to the first identification entity (309), and wherein if the subnetwork identifier (306) assigned for the identification (302) of the communication end device (301) and the subnetwork identifier (312) of the first subnetwork (307) are different the first identification entity (309) transmits the transmitted subnetwork identifier (306) to the communication end device (301), or if subnetwork identifier (306) assigned for the identification (302) of the communication end device (301) and the subnetwork identifier (312) of the first subnetwork (307) are different, the first identification entity (309) transmits the transmitted subnetwork identifier (306) to the second identification entity (313),
wherein the communication link (310) is established via the second subnetwork (315) if the subnetwork identifier (306) assigned to the transmitted identification (302) is the subnetwork identifier (314) of the second subnetwork.

2. Method (400) according to Claim 1, wherein the communication network (303) is a network of a fifth generation (5G) or of a further generation, and wherein the subnetworks (307, 311, 315) are slices of the communication network (303).

3. Method (400) according to either of the preceding claims, wherein the management entity (319) brings about the assignment (321) of the subnetwork identifier (306) to the communication end device (301) on the basis of at least one of the following assignments: an assignment of the identification (302) of the communication end device (301), particularly of a hardware identifier of the communication end device (301) such as IMSI or IMEI or eID to the subnetwork identifier (306), and/or an assignment of a communication service to the communication end device (301) and/or an assignment of a software application to the communication end device (301) and/or of an operating system of the communication end device (301) to one of the two subnetworks (307, 311).

4. Method (400) according to any one of the preceding claims, wherein an assignment (321) of subnetwork identifiers (312, 314, 316) to subnetworks (307, 311, 315) is stored in the management entity (319).

5. Method (400) according to any one of the preceding claims, wherein the communication end device (301) transmits the identification (302) of the communication device (301) to the first identification entity (309) or to the second identification entity (313) together with the subnetwork identifier (306) which displays the subnetwork (307, 311) that is assigned to the communication end device (301).

6. Method (400) according to Claim 5, wherein the first identification entity (309) transmits the identification (302) of the communication device (301) and the subnetwork identifier (312) of the first subnetwork (307) to the management entity (319).

7. Method (400) according to any one of the preceding claims, wherein in the step of establishing (404) the communication link (310) via the second subnetwork (311) the communication end device (301) transmits the identification (302) to the second identification entity (313).

8. Method (400) according to Claim 7, wherein in the step of establishing (404) the communication link (310) via the second subnetwork (311) the second identification entity (313) identifies the communication end device (301) on the basis of the identification (302) of the communication end device (301), and wherein when the identification of the communication end device (301) is completed the following steps are carried out:
Assignment of a subnetwork (307, 311, 315) to the communication end device (301) by the management entity (319) on the basis of the assignment (321) of a subnetwork identifier to the communication end device (301), and;
Establishing a communication link (310) with the communication end device (301) via the second subnetwork (311) if the subnetwork identifier (306) assigned to the identification (302) of the communication end device (301) corresponds to the subnetwork identifier (314) of the second subnetwork (311); or
Establishing a communication link (318) with the communication end device (301) via a further subnetwork (315) of the communication network (303) or
Rejecting the communication device (301) if the subnetwork identifier (306) assigned for the identification (302) of the communication end device (301) and the subnetwork identifier (314) of the second subnetwork (311) are different.

9. Method (400) according to any one of the preceding claims, wherein in the step of establishing (404) the respective communication link (308, 310) the communication end device (301) transmits the subnetwork identifier (306) assigned to the transmitted identification (302) to the first identification entity (309) or to the second identification entity (313).

10. Method (400) according to Claim 9, wherein the respective identification entity (309, 313) or the management entity (319) assigns a subnetwork (307, 311, 315) of the communication network (303) to the communication device (301) on the basis of the transmitted subnetwork identifier (306) if the transmitted subnetwork identifier (306) indicates a subnetwork of another communication network.

11. Method (400) according to Claim 10, wherein the respective identification entity (309, 313) or the management entity (319) assigns that subnetwork (307, 311, 315) of the communication network (301) which corresponds to the subnetwork of the other communication network to the communication device (301).

12. Method (400) according to any one of the preceding claims, wherein the communication link (308) is established via the first subnetwork (307) by the first identification entity, (309) and
wherein the communication link (310) is established via the second subnetwork (311) by the second identification entity (313) .

13. Communication system (300) comprising a communication end device (301) and a communication network (303), wherein the communication system (300) is configured to carry out the steps of the method according to any one of Claims 1-12.

## Revendications

1. Procédé (400) pour établir une connexion de communication d'un terminal de communication (301) via un réseau de communication (303), dans lequel le réseau de communication (303) présente une pluralité de sous-réseaux (307, 311, 315) avec un premier sous-réseau (307) et un deuxième sous-réseau (311), dans lequel une première entité d'identification (309) est disposée dans le premier sous-réseau (307) et une deuxième entité d'identification (313) pour identifier le dispositif de communication (301) est disposée dans le deuxième sous-réseau (311), dans lequel à chaque sous-réseau (307, 311) du réseau de communication (303) un identifiant de sous-réseau est alloué, dans lequel une entité de gestion (319) est disposée dans le réseau de communication (303), qui attribue (321) le terminal de communication (301) à un des deux sous-réseaux (307, 311), et dans lequel le procédé (400) comprend les étapes suivantes de:
réception (401) d'une identification (302) du terminal de communication (301) par la première entité d'identification (309) du premier sous-réseau (307), dans lequel l'identification (302) identifie le terminal de communication (301);
identification (402) du terminal de communication (301) par la première entité d'identification (309) sur la base de l'identification (302) du terminal de communication (301);
allocation (403) d'un sous-réseau au terminal de communication (301) par l'entité de gestion (319) sur la base d'une allocation (321) d'un identifiant de sous-réseau (306) au terminal de communication (301); et
établissement (404) d'une connexion de communication (308) du terminal de communication (301) via le premier sous-réseau (307) si l'identifiant de sous-réseau (306) alloué à l'identification (302) du terminal de communication (301) correspond à l'identifiant de sous-réseau (312) du premier sous-réseau (307) ; ou établissement d'une connexion de communication (310) du terminal de communication (301) via le deuxième sous-réseau (311) si l'identifiant de sous-réseau (306) alloué à l'identification transmise (302) et l'identifiant de sous-réseau (312) du premier sous-réseau (307) sont différents,
**caractérisé en ce que**,
à l'étape d'allocation (403) l'entité de gestion (319) transmet un identifiant de sous-réseau (306) alloué à l'identification (302) du dispositif de communication (301) à la première entité d'identification (309), et dans lequel, au cas où l'identifiant de sous-réseau (306) alloué à l'identification (302) du terminal de communication (301) et l'identifiant de sous-réseau (312) du premier sous-réseau (307) sont différents, la première entité d'identification (309) transmet l'identifiant de sous-réseau transmis (306) au terminal de communication (301) ou, au cas où l'identifiant de sous-réseau (306) alloué à l'identification (302) du terminal de communication (301) et l'identifiant de sous-réseau (312) du premier sous-réseau (307) sont différents, la première entité d'identification (309) transmet l'identifiant de sous-réseau transmis (306) à la deuxième entité d'identification (313),
dans lequel la connexion de communication (310) est établie via le deuxième sous-réseau (315) si l'identifiant de sous-réseau (306) alloué à l'identification transmise (302) est l'identifiant de sous-réseau (314) du deuxième sous-réseau.

2. Procédé (400) selon la revendication 1, dans lequel le réseau de communication (303) est un réseau de cinquième génération (5G) ou d'une génération ultérieure, et dans lequel les sous-réseaux (307, 311, 315) sont des tranches du réseau de communication (303).

3. Procédé (400) selon une quelconque des revendications précédentes, dans lequel l'entité de gestion (319) provoque l'allocation (321) de l'identifiant de sous-réseau (306) au terminal de communication (301) sur la base d'au moins une des allocations suivantes : une allocation de l'identification (302) du terminal de communication (301), notamment un identifiant matériel du dispositif de communication (301) tel que IMSI ou IMEI ou elD à l'identifiant de sous-réseau (306), et/ou une allocation d'un service de communication au terminal de communication (301) et/ou une allocation d'une application logicielle au terminal de communication (301) et/ou un système d'exploitation du terminal de communication (301) à un des deux sous-réseaux (307, 311).

4. Procédé (400) selon une quelconque des revendications précédentes, dans lequel une allocation (321) des identifiants de sous-réseau (312, 314, 316) aux sous-réseaux (307, 311, 315) est mémorisée dans l'entité de gestion (319) .

5. Procédé (400) selon une quelconque des revendications précédentes, dans lequel le terminal de communication (301) transmet l'identification (302) du dispositif de communication (301) à la première (309) ou à la deuxième (313) entité d'identification conjointement à l'identifiant de sous-réseau (306) qu'indique le sous-réseau (307, 311) alloué au terminal de communication (301).

6. Procédé (400) selon la revendication 5, dans lequel la première entité d'identification (309) transmet l'identification (302) du dispositif de communication (301) et l'identifiant de sous-réseau (312) du premier sous-réseau (307) à l'entité de gestion (319).

7. Procédé (400) selon une quelconque des revendications précédentes, dans lequel à l'étape d'établissement (404) de la connexion de communication (310) via le deuxième sous-réseau (311) le terminal de communication (301) transmet l'identification (302) à la deuxième entité d'identification (313) .

8. Procédé (400) selon la revendication 7, dans lequel à l'étape d'établissement (404) de la connexion de communication (310) via le deuxième sous-réseau (311) la deuxième entité d'identification (313) identifie le terminal de communication (301) sur la base de l'identification (302) du terminal de communication (301), et après une identification réussie du terminal de communication (301), les étapes suivantes sont exécutées :
allocation d'un sous-réseau (307, 311, 315) au terminal de communication (301) par l'entité de gestion (319) sur la base de l'allocation (321) d'un identifiant de sous-réseau au terminal de communication (301); et
établissement d'une connexion de communication (310) du terminal de communication via le deuxième sous-réseau (311), au cas où l'identification (302) de l'identifiant de sous-réseau alloué (306) au terminal de communication (301) correspond à l'identifiant de sous-réseau (314) du deuxième sous-réseau (311); ou
établissement d'une connexion de communication (318) du terminal de communication (301) via un autre sous-réseau (315) du réseau de communication (303) ou
refus du dispositif de communication (301) si l'identifiant de sous-réseau (306) alloué à l'identification (302) du terminal de communication (301) et l'identifiant de sous-réseau (314) du deuxième sous-réseau (311) sont différents.

9. Procédé (400) selon une quelconque des revendications précédentes, dans lequel à l'étape d'établissement (404) de la connexion de communication respective (308, 310) le terminal de communication (301) envoie l'identifiant de sous-réseau (306) alloué à l'identification transmise (302) à la première (309) ou à la deuxième (313) entité d'identification.

10. Procédé (400) selon la revendication 9, dans lequel l'entité d'identification respective (309, 313) ou l'entité de gestion (319) alloue un sous-réseau (307, 311, 315) du réseau de communication (303) au terminal de communication (301) sur la base de l'identifiant de sous-réseau alloué (306), au cas où l'identifiant de sous-réseau transmis (306) indique un sous-réseau d'un autre réseau de communication.

11. Procédé (400) selon la revendication 10, dans lequel l'entité d'identification respective (309, 313) ou l'entité de gestion (319) dudit sous-réseau (307, 311, 315) du réseau de communication (303) alloue au dispositif de communication (301), qui correspond au sous-réseau de l'autre réseau de communication.

12. Procédé (400) selon une quelconque des revendications précédentes, dans lequel la connexion de communication (308) est établie via le premier sous-réseau (307) par la première entité d'identification (309), et
dans lequel la connexion de communication (310) via le deuxième sous-réseau (311) est établie par la deuxième entité d'identification (313).

13. Système de communication (300) comprenant un terminal de communication (301) et un réseau de communication (303), dans lequel le système de communication (300) est conçu pour exécuter les étapes du procédé selon une quelconque des revendications 1 à 12.
